Europäisches Patentamt

European Patent Office

Office européen des brevets

(11) Publication number: **0 089 148**
**B1**

(12) **EUROPEAN PATENT SPECIFICATION**

(45) Date of publication of patent specification: **25.02.87**

(51) Int. Cl.⁴: **G 01 T 1/164**

(21) Application number: **83301140.6**

(22) Date of filing: **03.03.83**

(54) Multiple line detector for use in radiography.

(30) Priority: **15.03.82 US 357891**

(43) Date of publication of application:
**21.09.83 Bulletin 83/38**

(45) Publication of the grant of the patent:
**25.02.87 Bulletin 87/09**

(84) Designated Contracting States:
**DE GB NL**

(56) References cited:
**EP-A-0 024 028**
**FR-A-2 474 175**
**GB-A-1 406 685**
**US-A-4 160 167**
**US-A-4 284 889**

(73) Proprietor: THE BOARD OF TRUSTEES OF THE
LELAND STANFORD JUNIOR UNIVERSITY
Office of Technology and Licensing 105 Encina
Hall Stanford University
Stanford California 94305 (US)

(72) Inventor: Macovski, Albert
2505 Alpine Road
Menlo Park California 94025 (US)

(74) Representative: Cross, Rupert Edward Blount
et al
BOULT, WADE & TENNANT 27 Furnival Street
London EC4A 1PQ (GB)

Courier Press, Leamington Spa, England.

## Description

This invention relates generally to radiography, and more particularly a line scanned radiation system for use for projection radiography.

Line scanned radiation systems are employed in applications where a limited volume of a subject is to be inspected. Typically, radiation from a source is collimated whereby only a thin fan beam or swath of radiation is allowed to impinge on the subject. A detector is positioned on the opposite side of the subject to receive the attenuated radiation passing through the subject.

In US—A—4160167 there is disclosed such a system in which radiation from a source is collimated and passed as a swath through a subject and is then received by a multiple line detector array serving to produce a projection image of the subject, each line of the detector array comprising a plurality of individual detector elements.

In this known system the source and the detector array are rotated about the subject, the array comprising a number of detection elements which is larger than necessary for measurement of the swath per se, whereby detector element unbalance effects are averaged.

In EP—A—0024028 there is disclosed another system in which a source and a detector are rotated about a subject thereby to provide tomographic images.

A difficulty which arises with both these known systems is that corresponding elements in the detector array receive radiation from the source through the subject along different radiation paths.

According to this invention a line scanned radiation system for projection radiography in which radiation from a source is collimated and passed as a swath through a subject and is then received by a multiple line detector array serving to produce a projection image of the subject, each line of the detector array comprising a plurality of individual detector elements, is characterised by means to rotate the detector array relative to the subject about the source whereby each line of the detector array receives radiation along the same path through the subject, and by signal storage means connected to each detector element of the detector array, and means for integrating signals stored in the storage means and derived from corresponding detector elements in the lines of the detector array receiving radiation along the same radiation path.

The system of this invention avoid problems of variable radiation paths for corresponding detector elements from the lines of the detector array.

This invention will now be described by way of example with reference to the drawings, in which:—

Figure 1 is an illustrative plan view of the display of a line scanned projection radiography system;

Figure 2 is a perspective view of a linear detector array for use in a scanned projection system in accordance with the invention;

Figure 3 illustrates a line scanned projection radiography system in accordance with the invention;

Figure 4 is a schematic diagram of the charge transfer from a multiline detector array in a system in accordance with the invention;

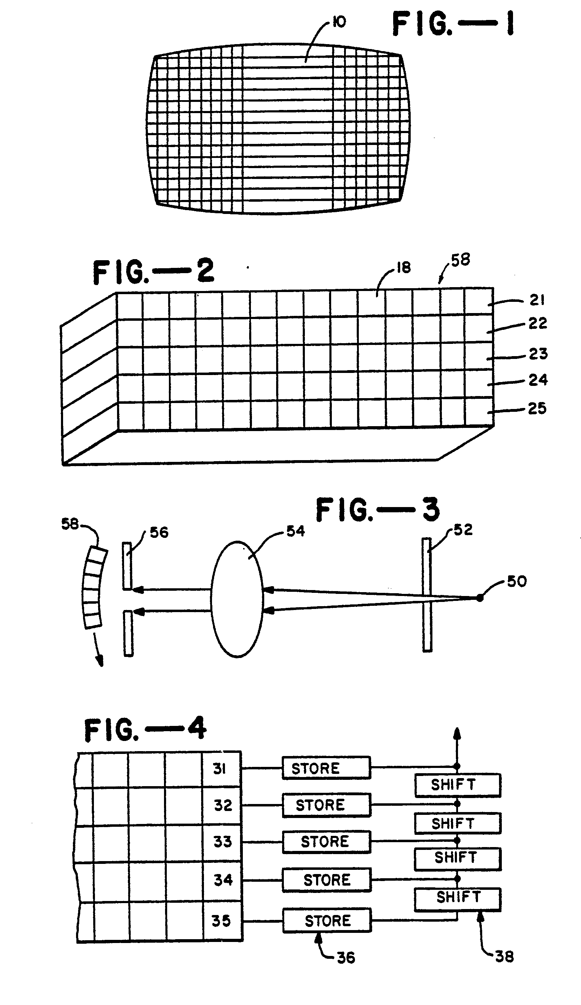

Referring now to the drawings, Figure 1 illustrates a typical video display in a scanned projection radiography system. The display comprises a plurality of horizontal scan lines 10 with each line having a plurality of pixels or picture elements. For example, the display may comprise several hundred scan lines with each line having five hundred pixels or picture elements.

The pixel values for each scan line can be obtained from a multiple line detector array 58 as illustrated in Figure 2 such array comprising a plurality of lines 21 to 25 of light detecting elements 18. Typically, each light detecting element comprises a scintillator crystal which generates light in response to impinging radiation and a light emitting diode which generates an electrical charge proportional to detected light.

Figure 3 illustrates the placement of a multiline detector 58 in a scanned projection radiography system in which radiation from a source 50 passes through a source collimator 52 through a subject 54 and thence to a detector collimator 56 prior to reception by the detector 58. By providing the detector collimator 56 whereby the radiation passing therethrough is of the same width as the detector 58, photon scatter can be minimized.

With the source 50 held stationary the detector 58 is rotated as indicated whereby the X-ray beam path for each successive line exactly duplicates the previous X-ray beam path. The collimators 52 and 56 can be rotated with the detector array to minimize scatter.

Figure 4 is a schematic diagram illustrating signal transfer from five corresponding detector elements 31—35 from five lines of a detector array. As illustrated, the signal from each detector element is transferred to a storage element 36 and is subsequently passed through a shifter 38 and summed with the signal from the detector element thereabove. The signal storage elements and shifting elements may comprise charge coupled devices (CCDs). Thus, by continually shifting the charge upward, charge from each of the elements 31—35 is summed and provided as an output to a data acquisition system (not shown). After each charge packet from a detector element is stored, the detector array is incremented by one line spacing whereby the accumulated charge from the corresponding detector elements corresponds to the same line position with respect to the scanned subject.

With such a system each sequence of collected charge represents the output from the same section in the subject under inspection. However, if the source and array are linearly scanned with respect to the subject, this is not exactly true since the beams going to each line in the detector array are at slightly different angles, and each successive line represents a slightly different path through the object.

This difficulty is overcome in the system of the present invention by the rotation of the detector array 58 relative to the subject 54 about the source 50, this resulting in corresponding detector elements from different lines receiving radiation along the same path through the subject 54.

A multiline detector array is particularly advantageous when used in a multiple energy system. For example, in a dual energy system the source spectrum is alternated between a high and low energy level. The multiple line detector array is moved the distance of one line for each spectrum. Two sets of storage systems are needed in a dual energy system so that the information corresponding to each energy spectrum can be stored separately.

## Claims

1. A line scanned radiation system for projection radiography in which radiation from a source (5) is collimated (52) and passed as a swath through a subject (54) and is then received by a multiple line detector array (58) serving to produce a projection image of the subject (54), each line (21—25) of the detector array (58) comprising a plurality of individual detector elements (18), characterised by means to rotate the detector array relative to the subject (54) about the source (50) whereby each line (21—25) of the detector array (58) receives radiation along the same path through the subject (54), and by signal storage means (36) connected to each detector element of the detector array (58), and means (38) for integrating signals stored in the storage means (36) and derived from corresponding detector elements in the lines of the detector array (58) receiving radiation along the same radiation path.

2. A system as claimed in Claim 1, characterised by a collimator (56) arranged between the subject (54) and the detector array (58).

3. A system as claimed in Claim 1 or Claim 2, characterised in that the radiation includes a high energy level and a low energy level, a first group of lines of the detector array (58) receiving high energy level radiation, and a second group of lines of the detector array (58) receiving low energy level radiation.

## Patentansprüche

1. Zeilengetastetes Strahlungssystem für die Projektionsradiographie, bei dem Strahlung von einer Ouelle (5) parallelgerichtet (52) und als gefächerter Strahl durch einen Gegenstand (54) geleitet und darauf mittels einer mehrere Zeilen umfassenden Detektoranordnung (58) empfangen wird, die ein Projektionsbild des Gegenstandes (54) erzeugt, wobei jede Zeile (21—25) der Detektoranordnung (58) mehrere einzelne Detektorelemente (18) enthält, gekennzeichnet durch eine Einrichtung zur Drehung der Detektoranordnung gegenüber dem Gegenstand (54) um die Quelle (50), wodurch jede Zeile (21—25) der Detektoranordnung (58) Strahlung längs des gleichen Weges durch den Gegenstand (54) empfängt, durch eine an jedes Detektorelement der Detektoranordnung (58) angeschlossene Signal-Speichereinrichtung (36), und durch eine Einrichtung (38) zur Integration in der Speichereinrichtung (36) gespeicherter und von entsprechenden Detektorelementen in den Zeilen der längs des gleichen Strahlungsweges Strahlung empfangenden Detektoranordnung (58) abgeleiteter Signale.

2. System nach Anspruch 1, gekennzeichnet durch einen zwischen dem Gegenstand (54) und der Detektoranordnung (58) angeordneten Kollimator (56).

3. System nach Anspruch 1 oder 2, dadurch gekennzeichnet, daß die Strahlung einen hohen und einen niedrigen Energiepegel umfaßt, wobei eine erste Gruppe von Zeilen der Detektoranordnung (58) Strahlung mit hohem und eine zweite Gruppe von Zeilen der Detektoranordnung (58) Strahlung mit einem niedrigen Energiepegel empfängt.

## Revendications

1. Système de rayonnement à balayage de lignes pour radiographie par projection dans lequel une rayonnement d'une source (5) est collimaté (52) et passé sous forme de pinceau à travers un sujet (54), puis est reçu par un réseau détecteur (58) à lignes multiples servant à produire une image projetée du sujet (54), chaque ligne (21—25) du réseau détecteur (58) comprenant plusieurs éléments détecteurs individuels (18), caractérisé par des moyens destinés à faire tourner le réseau détecteur par rapport au sujet (54) autour de la source (50) afin que chaque ligne (21—25) du réseau détecteur (58) reçoive un rayonnement suivant le même trajet à travers le sujet (54), et par des moyens (36) de mémorisation de signaux connectés à chaque élément détecteur du réseau détecteur (58), et des moyens (38) destinés à intégrer des signaux mémorisés dans les moyens (36) de mémorisation et provenant des éléments détecteurs correspondants situés dans les lignes du réseau détecteur (58) recevant un rayonnement suivant le même trajet de rayonnement.

2. Système selon la revendication 1, caractérisé par un collimateur (56) agencé entre le sujet (54) et le réseau détecteur (58).

3. Système selon la revendication 1 ou la revendication 2, caractérisé en ce que le rayonnement comprend un niveau d'énergie haut et un niveau d'énergie bas, un premier groupe de lignes du réseau détecteur (58) recevant le rayonnement de niveau d'énergie haut et un second groupe de lignes du réseau détecteur (58) recevant un rayonnement de niveau d'énergie bas.

FIG.—1

FIG.—2

FIG.—3

FIG.—4